# EUROPEAN PATENT SPECIFICATION

(11) **EP 1 992 812 B1**
(45) Date of publication and mention of the grant of the patent: **27.06.2012**
(21) Application number: 08251687.3
(22) Date of filing: 13.05.2008
(51) Int. Cl.: F02M 35/10, F02M 69/04, F02M 35/04

(54) **Motorcycle**
Motorrad
Motocyclette

(30) Priority: 17.05.2007 JP 2007131418
(43) Date of publication of application: 19.11.2008
(73) Proprietor: Yamaha Hatsudoki Kabushiki Kaisha, Shizuoka-ken Shizuoka 438-8501 (JP)
(72) Inventor: Kyouji, Morita, c/o Yamaha Hatsudoki K.K., Iwata-shi, Shizuoka-ken, 438-8501 (JP)
(74) Representative: Grünecker, Kinkeldey, Stockmair & Schwanhäusser

(56) References cited:
- EP-A1- 1 754 884
- WO-A1-2004/038214
- JP-A- 2006 096 200
- US-A1- 2004 118 362

## Description

### Technical Field

The present invention relates to a motorcycle provided with a fuel injection valve according to the preamble of claim 1. Such a motorcycle is known from EP 1 754 884 A1.

### Background Art

WO2004/038214 discloses a motorcycle having mounted thereon an engine provided with a fuel injection valve. The engine disclosed therein is suspended from and supported on a main pipe in a state in which a cylinder axis of a cylinder is directed substantially forward. An air cleaner is mounted to the main pipe obliquely upwardly of the engine toward the front of a vehicle and connected to a cylinder head. Also, the fuel injection valve is assembled to the cylinder head in the vicinity of a location of connection of an intake pipe.

With the conventional engine described above, the air cleaner is arranged in a position, which is obliquely upwardly of the cylinder head toward the front of a vehicle, so that the intake pipe rises from the cylinder head side. Accordingly, the fuel injection valve arranged in the vicinity of the location of connection of the intake pipe is singly exposed without assembled parts therearound except for the intake pipe. Therefore, there is a risk of interference with foreign matter.

The invention aims to protect a fuel injection valve from interference with foreign matter.

### Summary

The aim of the invention is achieved by a motorcycle according to claim 1.

The invention provides a motorcycle comprising a cylinder head mounted to a vehicle front portion of a cylinder head in an overlapping state, an air cleaner arranged in the vicinity of the vehicle front portion of the cylinder head, an intake pipe connected between the cylinder head and the air cleaner, and a fuel injection valve, at least a part of which is arranged inside a region surrounded by the cylinder head, the air cleaner, and the intake pipe as viewed from laterally of a vehicle.

In an embodiment of the invention the fuel injection valve is protected from interference with foreign matter since at least a part thereof is positioned to be surrounded by the cylinder head, the air cleaner, and the intake pipe as viewed from laterally of the vehicle.

According to claim 2 at least a part of the fuel injection valve can be positioned in a region projected onto the air cleaner as viewed from the front of a vehicle. In such an embodiment a part of the fuel injection valve is positioned to be hidden behind the air cleaner as viewed from the front of a vehicle, and so becomes hard to be covered with mud, water, etc., which are splashed by a front wheel.

According to claim 3 at least a part of the fuel injection valve can be arranged offset in a vehicle width direction from a projected region on the intake pipe as viewed in a plan view of a vehicle. In such an embodiment, since a space above the fuel injection valve is not obstructed by the intake pipe, the mounting of the fuel injection valve is made easy to perform.

According to the invention, a cylinder head cover is mounted on a side of the vehicle front portion of the cylinder head and the air cleaner is mounted on a vehicle front side of the cylinder head cover. In such an embodiment, since the air cleaner is mounted in a position close to the fuel injection valve, such arrangement is effective in avoiding interference of foreign matter with the fuel injection valve.

Accordng to the invention, one end of the intake pipe is connected to an upper surface of the cylinder head to rise upward from a region of connection to extend forward and the other end thereof is bent downward to be connected to an upper surface of the air cleaner. In such an embodiment, since the whole of the intake pipe is laid to bypass upward between the cylinder head and the air cleaner, it is easy to ensure a region inside, so that an increased freedom of the arrangement of the fuel injection valve is provided.

According to claim 4 the fuel injection valve can be mounted to the cylinder head and the intake pipe can include a throttle body accommodating therein a throttle valve so as to enable opening and closing of the same, an upstream end of a bypass pipe being connected to an intake passage formed in the throttle body and a downstream end of the bypass pipe extending above the intake pipe to be connected in the vicinity of an injection tip of the fuel injection valve, whereby at least a part of a piping path of the bypass pipe can be distributively arranged above a boundary being a center line of the intake pipe as viewed from laterally of the vehicle and the fuel injection valve can be distributively arranged below the boundary. In such an embodiment, since the bypass pipe and the fuel injection valve are arranged to be distributed above and below the intake pipe as viewed from laterally of a vehicle, mutual interference can be avoided.

According to claim 5 a throttle body accommodating therein a throttle valve so as to enable opening and closing of the same is connected to an intermediate portion of the intake pipe, a pulley, around which a wire is wound and which enables opening and closing of the throttle valve in response to a moving action of the wire in a longitudinal direction, is mounted to an outer side of the throttle body in a vehicle width direction and the bypass pipe extends on an opposite side to that side of the intake pipe on which the pulley is provided, as viewed in a plan view of a vehicle. In such an embodiment, since the bypass pipe extends on an opposite side of the intake pipe to the pulley, it is possible to avoid a vehicle width being enlarged only on one side of a vehicle center line.

According to claim 6 the fuel injection valve can be mounted to the cylinder head, at least a part thereof being arranged in a projected region of the intake pipe as viewed from laterally of a vehicle. When the fuel injection valve is arranged below the intake pipe, the intake pipe must be laid at a height away from interference with the fuel injection valve. When the fuel injection valve is arranged offset from the intake pipe in the vehicle width direction, the intake pipe can be arranged overlapping the fuel injection valve in a height direction, so that a total height of the engine including the intake pipe can be kept low.

According to claim 7 a throttle body accommodating therein a throttle valve so as to enable opening and closing of the same can be connected to an intermediate portion of the intake pipe, a pulley, around which a wire is wound and which enables opening and closing of the throttle valve in response to a moving action of the wire in a longitudinal direction, is mounted to one outer side of the throttle body in a vehicle width direction and the fuel injection valve is arranged on an opposite side to that side on which the pulley is arranged, as viewed in a plan view of a vehicle. In such an embodiment, since a region in which the wire for driving of the pulley is laid, and a region, in which a fuel pipe is laid relative to the fuel injection valve, are set separately on both sides with the intake pipe therebetween in the vehicle width direction, the respective laying can be readily performed.

According to claim 8 at least a part of a piping path of the intake pipe can extend on a central axis with respect to a vehicle width direction, a connected end of the intake pipe toward the air cleaner can be arranged offset from the central axis with respect to the vehicle width direction, and at least a part of the fuel injection valve can be arranged in a projected region at the connected end toward the air cleaner as viewed from the front of a vehicle. In such an embodiment, since the fuel injection valve is positioned hiding behind the connected end of the intake pipe toward the air cleaner, it becomes hard to be covered with mud, water, etc., which are splashed by a front wheel.

### Brief Introduction to the Drawings

Embodiments of the invention are described hereinafter, by way of example only, with reference to the accompanying drawings.
Fig. 1 is a right side view showing a state, in which an engine of a motorcycle is mounted.
Fig. 2 is a front view showing the engine as viewed from the front of the vehicle.
Fig. 3 is a plan view showing the engine as viewed from above the vehicle.
Fig. 4 is a right side view showing the engine.
Fig. 5 is a left side view showing the engine.
Fig. 6 is a left, cross sectional view showing the engine.

### Detailed Description

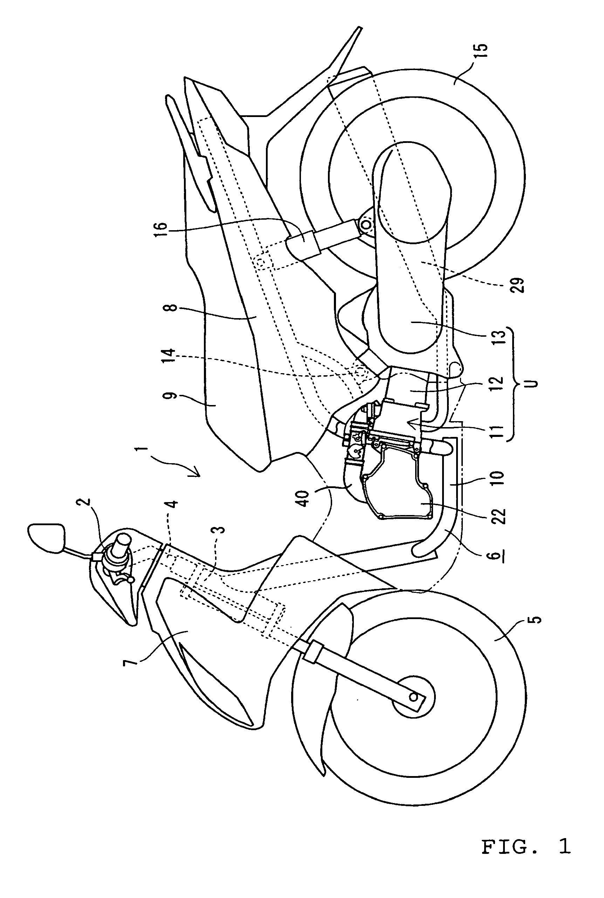

An embodiment of the invention will be described with reference to Figs. 1 to 6. In the following description the indication of left and right is referred to where the vehicle is seen from the front.

Fig. 1 shows the whole of a motorcycle according to the embodiment. A vehicle body 1 includes a handle 2 at the front thereof, the handle 2 being connected to a front wheel 5 through a steering shaft 4, through which a head pipe 3 extends. A body frame 6 forming a skeleton structure of the whole vehicle body is coupled to the head pipe 3. A cowling 7 covers the front of the vehicle body. The whole vehicle body 1 is covered by a body cover 8 and provided centrally thereof with a seat 9.

An engine unit U is mounted to a main pipe 10, which constitutes the body frame 6. The engine unit U comprises an engine 11, a crank case 12, and a power transmission unit 13, by which motive power of the engine 11 is transmitted to a rear wheel side. The engine unit U is suspended from the body frame 6 to be able to turn about a pivot 14. A rear portion of the engine unit U connects thereto a rear wheel 15 and pivotally connects thereto a lower end of a shock absorber 16. An upper end of the shock absorber 16 is connected pivotally to the body frame 6. Thereby, the engine unit U together with the rear wheel 15 can swing about the pivot 14 and constitutes a swing unit type engine.

The engine 11 is a four-stroke single cylinder engine provided with a fuel injection valve 17. The engine 11 with a cylinder axis positioned substantially horizontal and directed forward is fixed to the body frame 6 by means of bolting with a bracket or the like therebetween. The engine 11 is clamped in a state, in which a cylinder block 19 and a cylinder head 20 are layered in this order on a front wall of the crank case 12, in which a crank shaft 18 is built. A cylinder head cover 21 is mounted to a vehicle front side of the cylinder head 20 and an air cleaner 22 is mounted to a vehicle front side of the cover 21 in a layered state.

A piston 23 is accommodated slidably in a cylinder bore 19A of the cylinder block 19, the piston 23 being connected to the crank shaft 18 through a connecting rod 24. A combustion recess 25 is formed on that portion of the cylinder head 20, which mates with the cylinder bore 19A, to define a combustion chamber between it and the piston 23. An exhaust port 26 and an intake port 27 communicate with the combustion chamber are opened to the combustion recess 25. The exhaust port 26 communicated with an exhaust passage 28 defined in the cylinder head 20. The exhaust passage 28 extends downward in the cylinder head 20 to have an opened end thereof connected to an exhaust pipe 29. On the other hand, the intake port 27 is communicated to an intake path 30 defined in the cylinder head 20.

The exhaust port 26 is opened and closed by a valve head 31A of an exhaust valve 31 provided in the cylinder head 20 and the intake port 27 is opened and closed by a valve head 32A of an intake valve 32 likewise provided in the cylinder head 20. The exhaust valve 31 and the intake valve 32 comprise valve springs 31B, 32B, and spring forces act on the respective valve heads 31A, 32A in directions, in which corresponding ports 26, 27 are closed. A cam shaft 34 provided with a cam 33 for both intake and exhaust is arranged rotatably between those portion of the exhaust valve 31 and the intake valve 32 in the cylinder head 20, on which the respective valve springs 31B, 32B are provided. An exhaust rocker arm 35 is arranged in a longitudinal posture between the cam shaft 34 and a valve shaft end of the exhaust valve 31. The exhaust rocker arm 35 is supported by an exhaust rocker arm shaft 35A to freely swing. On the other hand, an intake rocker arm 36 is arranged in a longitudinal posture between the cam shaft 34 and a valve shaft end of the intake valve 32. The intake rocker arm 36 is supported by an intake rocker arm shaft 36A to freely swing. Both of the exhaust and intake rocker arms 35, 36 enable one end sides thereof to respectively contact with cams 33, which are mounted in corresponding positions on the cam shaft 34, and enable the other end sides thereof to respectively push front ends of respective valve shafts of the intake valve 32 and the exhaust valve 31. Thereby, the exhaust valve 31 and the intake valve 32, respectively, can perform a port opening action in a predetermined timing while resisting the valve springs 31B, 32B.

The fuel injection valve 17 is arranged on a left side upper portion of the cylinder head 20 and in the vicinity of the intake port 27. The fuel injection valve 17 is mounted to the cylinder head 20 in a state of being assembled into a holder 37 with an O-ring therebetween to be united therewith. An injection tip of the fuel injection valve 17 faces an interior of an air-fuel mixture chamber 38 formed in the holder 37, the air-fuel mixture chamber 38 being communicated to the intake path 30. The fuel injection valve 17 is held in an inclined posture directed downwardly rearwardly of a vehicle so that the injection tip is directed to the intake port 27. More specifically, fuel jetted from the fuel injection valve 17 flows tangentially of the combustion recess 25 from the intake port 27 to generate a swirling flow in the combustion recess 25.

In addition, a control unit such as ECU (Engine Control Unit) (not shown) controls the timing, in which the fuel injection valve 17 jets fuel toward the intake port 27.

The intake path 30 extends upward in the cylinder head 20 and its end is positioned in a connecting cylinder 39 protruding from an upper surface of the cylinder head 20 and on a central axis in a vehicle width direction. An intake pipe 40 connects between the connecting cylinder 39 and the air cleaner 22.

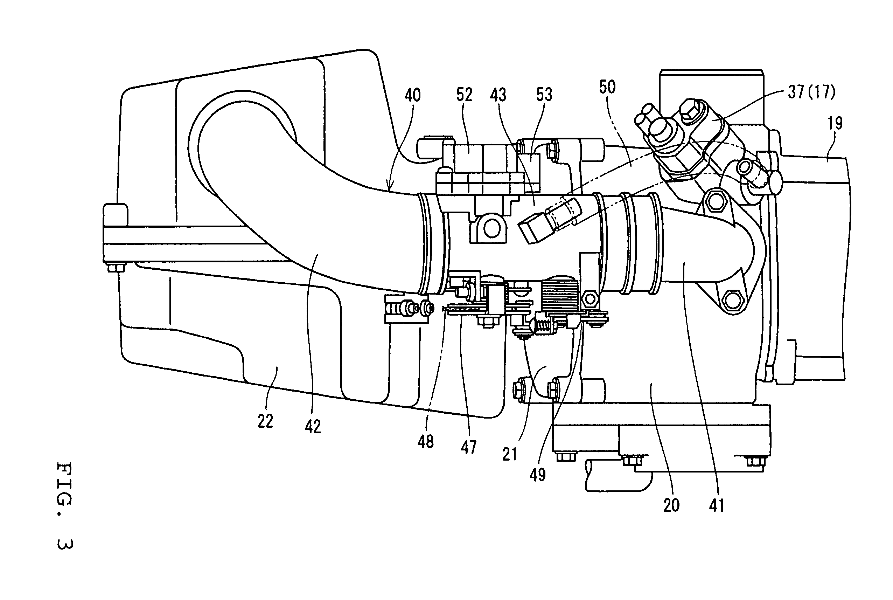

In the embodiment, the intake pipe 40 comprises a connecting pipe 41 bolted to the connecting cylinder 39, an intake hose 42 connected to an upper surface of the air cleaner 22 toward the left thereof, and a throttle body 43 interposed between the intake hose 42 and the connecting pipe 41. The air cleaner 22 can take in outside air through an air suction port 54 opened on a side toward a lower portion thereof. An interior of the air cleaner 22 is compartmented into upper and lower chambers 22A, 22B by a filter element 44 and outside air taken in through the air suction port 54 is filtered through the filter element 44 to be drawn from the intake hose 42 inserted into the upper chamber 22B. As shown in Fig. 3, the intake hose 42 is connected to the air cleaner 22 in a position offset leftward from centrally in the vehicle width direction. The air cleaner 22 rises from the offset connected end while being bent toward a center line in the vehicle width direction to be directed toward the rear of a vehicle along a center in the vehicle width direction with a rear end thereof connected to the throttle body 43. A region of connection between the intake hose 42 and the throttle body 43 is positioned above a dent portion 22C formed on a base portion of the air cleaner 22. Both the throttle body 43 and the connecting pipe 41 are arranged substantially along the center line in the vehicle width direction. They slope gradually downwardly toward the rear of a vehicle to extend to the connecting cylinder 39.

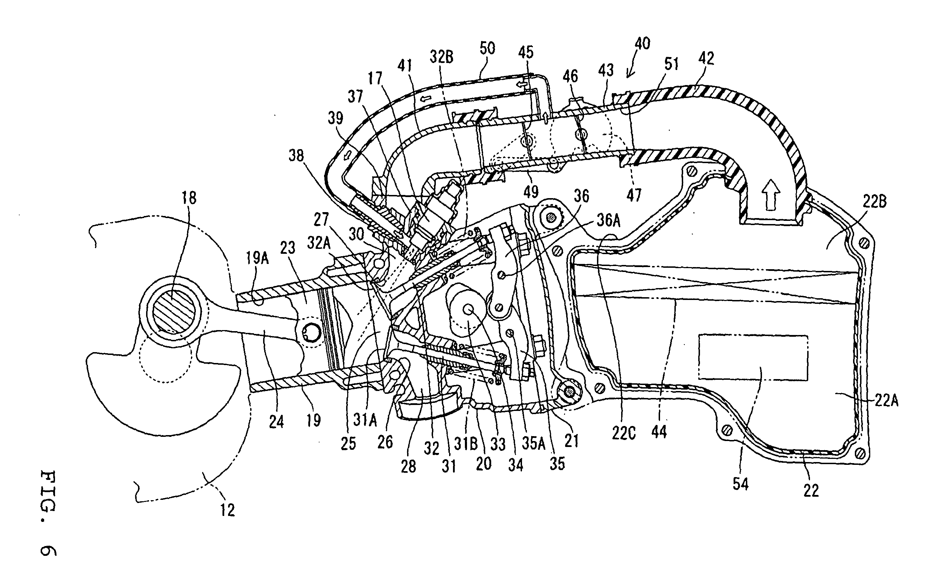

As shown in Fig. 6, first and second throttle valves 45, 46 are arranged in the throttle body 43 to align in a longitudinal direction of a vehicle. A valve stem of the second throttle valve 46 projects from a right side of the throttle body 43 and mounts to a shaft end thereof a drive pulley 47 to enable the same to turn. An end of a throttle operating wire 48 is wound round the drive pulley 47 and the other end of the wire 48 is connected to a throttle grip (not shown) of the handle 2. A valve stem of the first throttle valve 45 also projects from the right side of the throttle body 43 and connects to a shaft end thereof the drive pulley 47 through a linkage type delay mechanism 49. One end of a bypass pipe 50 is opened in a substantially intermediate position between the first and second throttle valves 45, 46 on an upper surface of the throttle body 43 centrally in the vehicle width direction. The bypass pipe 50 extends obliquely and leftwardly toward the rear of a vehicle from a region for connection to the throttle body 43, passes above the fuel injection valve 17 to reach a side of the fuel injection valve 17 toward the rear of a vehicle, and connects there to the holder 37 of the fuel injection valve 17. The bypass pipe 50 is opened in the vicinity of the air-fuel mixture chamber 38 of the fuel injection valve 17 to supply an atomizing air to fuel jetted from the fuel injection valve 17, thus serving to promote atomization of the fuel.

Opening degrees of the first and second throttle valves 45, 46 are controlled in the following manner according to changes in load (throttle manipulated variable). The first throttle valve 45 is held in a fully closed position from a no-load (idling) running region to a predetermined partial-load running region. Accordingly, the quantity of air flowing into the combustion recess 25 is controlled only on the basis of an opening degree of the second throttle valve 46. In the partial-load running region, air is sucked through the bypass pipe 50 to mix with fuel jetted from the fuel injection tip. At this time, the fuel injection valve 17 is arranged in the vicinity of the intake valve 32 and so decreases adhesion of the jetted fuel to a wall surface to contribute to an increase in response. Also, owing to promotion of atomization of the fuel, it is possible to reduce unburned fuel, which is liable to generate at the time of cold start of the engine 11.

On the other hand, in the course from the partial-load running region to a high-load running region, the first throttle valve 45 is opened according to throttle manipulation, so that air is taken in also from a main passage 51 (intake passage) in the throttle body 43.

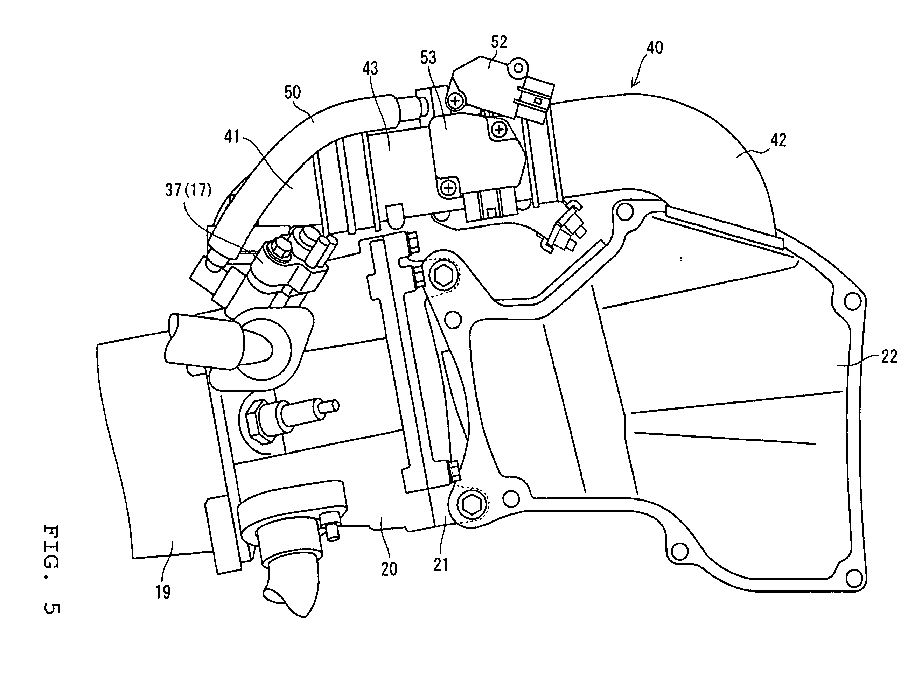

As shown in Fig. 5, an idling speed control sensor 52 and an intake pressure sensor 53 are mounted to a left side (opposite surface to a surface, to which the drive pulley 47 is mounted) of the throttle body 43. The idling speed control sensor 52 is connected to ECU (not shown) to exercise an idling control determining an idling state in the case where the opening degree of the second throttle valve 46 is equal to or less than a predetermined opening degree. Also, the intake pressure sensor 53 is also connected to ECU to control the fuel injection quantity of the fuel injection valve 17 on the basis of results of a detected air pressure in the throttle body 43.

By the way, the fuel injection valve 17 is arranged in the following relationship with its surrounding members.

### (Mutual relationship of air cleaner 22, cylinder head 20, and intake pipe 40)

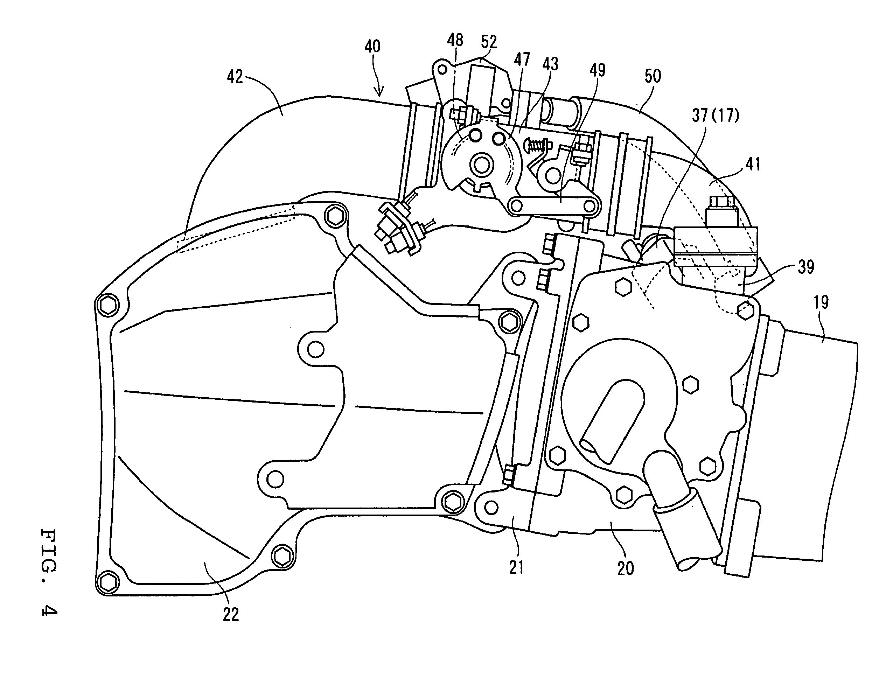

As shown in Fig. 4 or 5, as viewed from laterally of a vehicle, the fuel injection valve 17 is arranged inside a plane region surrounded by the cylinder head 20, the air cleaner 22, and the intake pipe 40. Such arrangement is advantageous especially in keeping away from foreign matters approaching from the right, on which the fuel injection valve 17 is not provided.

Since the intake pipe 40 connects between upper surfaces of respective members of the cylinder head 20 and the air cleaner 22, the intake pipe 40 can be laid in a path bypassing a space above the cylinder head 20 and the air cleaner 22, so that it is easy to enlarge a region surrounding the fuel injection valve 17. If an upper surface of the cylinder head 20 and a side of the air cleaner 22 were connected to each other, the intake pipe 40 would be "twisted" midway in a height direction, so that a region surrounding the fuel injection valve 17 would be made small to cause a fear of restriction on a position, in which the fuel injection valve 17 should be mounted.

While it is conceivable to arrange the fuel injection valve 17 in a position just below the intake pipe 40 as viewed in plan view (see Fig. 3), it is arranged leftwardly offset in the embodiment. In such arrangement, the fuel injection valve 17 is not hidden behind the intake pipe 40 but generally exposed as viewed from above, thus producing an effect that when the fuel injection valve 17 is to be mounted, the work can be performed smoothly without encountering the interference from the intake pipe 40.

As shown in Fig. 4, the fuel injection valve 17 is arranged so that locations, in which the connecting pipe 41 constituting the intake pipe 40 and the connecting cylinder 39 are connected, overlap in a height direction as viewed from laterally of a vehicle. If the fuel injection valve 17 were mounted in a position just below the intake pipe 40, it would be necessary to lay the intake pipe 40 in a height position, in which interference with the fuel injection valve 17 were avoided, but the intake pipe in the embodiment is arranged leftwardly offset, thus enabling an arrangement overlapping in the height direction as viewed from laterally of a vehicle. Accordingly, it is possible to lower a height position of the intake pipe 40, thus enabling contributing to restriction on a total height of a vehicle.

The fuel injection valve 17 is provided on the left of the throttle body 43, which constitutes the intake pipe 40, and the drive pulley 47 is provided on the right of the throttle body 43. As described above, the throttle operating wire 48 must be wound round the drive pulley 47. On the other hand, a fuel pipe and electric wiring must be connected to the fuel injection valve 17. Since the fuel injection valve 17 has its axial direction directed toward the throttle body 43, laying of the wire 48 and piping · wiring would crowd in the same region to make the work troublesome if the drive pulley 47 were set on the right of the throttle body 43. However, the embodiment provides excellent workability since the work can be performed separately on the left and right of the throttle body 43.

An end on that side, on which the intake pipe 40 is connected to the air cleaner 22, is on a side, on which the fuel injection valve 17 is provided. Being positioned leftwardly offset from the center line in the vehicle width direction, the fuel injection valve 17 is hidden behind a region connected to the air cleaner 22. Thereby, the function of protecting the fuel injection valve 17 is further heightened.

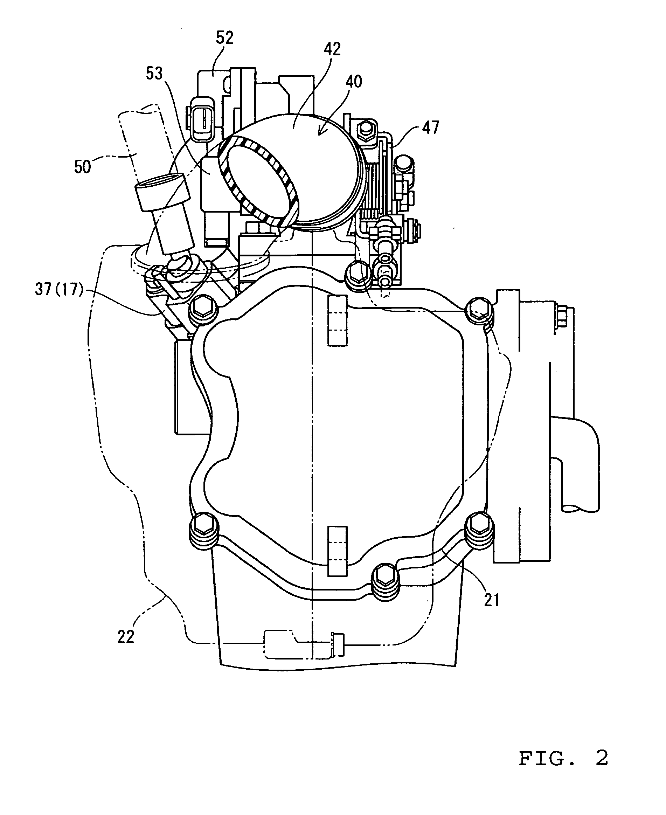

Fig. 2 is a view showing the engine unit U in a state, in which the air cleaner 22 is removed, as viewed from the front of a vehicle. As apparent from the figure, it is seen that substantially the whole of the fuel injection valve 17 is positioned inside a region, onto which the air cleaner 22 is projected and which is indicated by imaginary lines. That is, the air cleaner 22 (air cleaner box) is formed such that a vehicle front side is further enlarged in a height direction than a vehicle rear side being a side of an end, at which it is connected to the cylinder head cover 21 and it projects considerably on that left side, on which the fuel injection valve 17 is provided, in the vehicle width direction, particularly as shown in Fig. 2, so that it is positionally related so as to hide substantially the whole of the fuel injection valve 17 behind the air cleaner 22. Accordingly, it is possible to protect the fuel injection valve 17 from foreign matter (for example, pebbles, mud, water, etc. splashed by the front wheel 5) approaching from the front. Besides, while the air cleaner 22 is arranged separately from the engine unit U conventionally in many cases, it is mounted to the cylinder head cover 21 in the embodiment to make the air cleaner 22 approach the fuel injection valve 17, which is an object being protected, as far as possible, so that it is possible to securely protect the fuel injection valve 17.

As shown in Fig. 6, the bypass pipe 50 is laid to extend above the intake pipe 40 to pass around and behind the fuel injection valve 17. That is, such arrangement facilitates the work of piping mounting since mutual interference is avoided by a vertically distributed arrangement with the intake pipe 40 as a boundary such that a piping path of the bypass pipe 50 is positioned most above a center line of the intake pipe 40 being a boundary as viewed from laterally of a vehicle and the fuel injection valve 17 is positioned below the center line.

As shown in Fig. 3, a region, in which the bypass pipe 50 is laid, is on the left of the intake pipe 40 opposed to the drive pulley 47, so that the piping work and the work of winding the wire around the drive pulley 47 are performed interposing the intake pipe 40 therebetween. Accordingly, separation of the working spaces are attained here.

Accordingly, in order to protect a fuel injection valve from interference with foreign matter in an engine in which a cylinder axis is directed substantially horizontal, there has been described an air cleaner 22 mounted to a vehicle front side of a cylinder head 20 in an overlapping state. A fuel injection valve 17 is mounted to an upper surface of the cylinder head 20. An intake pipe 40 connects between the upper surface of the cylinder head 20 and an upper surface of the air cleaner 22. As viewed from laterally of a vehicle, the intake pipe 40 is laid to bypass above the fuel injection valve 17. Consequently, the fuel injection valve 17 is arranged inside a region surrounded by the cylinder head 20, the air cleaner 22, and the intake pipe 40, so that it is protected from interference with foreign matters.

The invention is not limited to the embodiment illustrated in the above descriptions and the drawings but, for example, the following embodiments are included within the technical scope of the invention.

While in the embodiment the air cleaner 22 is mounted to the cylinder head cover 21 in an overlapping state, the air cleaner 22 may be provided separately from the cylinder head cover 21.

The position, in which the intake pipe 40 is connected to the cylinder head 20 or the air cleaner 22, is not necessarily limited to upper surfaces thereof, but may be on other surfaces such as a side or the like.

A piping path of the intake pipe 40 is not necessarily limited to a space above an engine but may be disposed in a space therebelow. In this case, the fuel injection valve 17 will be mounted on a lower surface side of the cylinder head 20.

The bypass pipe 50 is not necessarily connected to the upper surface of the throttle body 43 but may be connected to a lower surface thereof to extend in a region below the intake pipe 40 to be connected to the cylinder head 20.

### Description of Reference Numerals and Signs

- 17:: fuel injection valve
- 20:: cylinder head
- 21:: cylinder head cover
- 22:: air cleaner
- 40:: intake pipe
- 43:: throttle body
- 47:: drive pulley

## Claims

1. A motorcycle forming a vehicle and comprising a cylinder head (20) having a vehicle front portion,
an air cleaner (22) arranged in the vicinity of the vehicle front portion of the cylinder head (20),
an intake pipe (40) connected between the cylinder head (20) and the air cleaner (22), and
a fuel injection valve (17),
**characterized in that**
at least a part the fuel injection valve (17) is arranged inside a region surrounded by the cylinder head (20), the air cleaner (22), and the intake pipe (40) as viewed from laterally of the vehicle,
a cylinder head cover (21) is mounted on a side of the vehicle front portion of the cylinder head (20) and the air cleaner (22) is mounted on a vehicle front side of the cylinder head cover (21), and
one end of the intake pipe (40) is connected to an upper surface of the cylinder head (20) to rise upward from a region of connection to extend forward and the other end thereof is bent downward to be connected to an upper surface of the air cleaner (22).

2. The motorcycle according to claim 1, wherein at least a part of the fuel injection valve (17) is positioned in a region projected onto the air cleaner (22) as viewed from the front of the vehicle.

3. The motorcycle according to claim 1 or claim 2, wherein at least a part of the fuel injection valve (17) is arranged offset in a vehicle width direction from a projected region on the intake pipe (40) as viewed in a plan view of the vehicle.

4. The motorcycle according to any one of the preceding claims, wherein the fuel injection valve (17) is mounted to the cylinder head (20) and
the intake pipe (40) includes a throttle body (43) accommodating therein a throttle valve (45, 46) so as to enable opening and closing of the same, an upstream end of a bypass pipe (50) being connected to an intake passage (51) formed in the throttle body (43) and a downstream end of the bypass pipe (50) extending above the intake pipe (40) to be connected to the vicinity of an injection tip of the fuel injection valve (17),
whereby at least a part of a piping path of the bypass pipe (50) is distributively arranged above a boundary being a center line of the intake pipe (40) as viewed from laterally of the vehicle and the fuel injection valve (17) is distributively arranged below the boundary.

5. The motorcycle according to any one of the preceding claims, wherein a throttle body (43) accommodating therein a throttle valve (45, 46) so as to enable opening and closing of the same is connected to an intermediate portion of the intake pipe (40), a pulley (47), around which a wire (48) is wound and which enables opening and closing of the throttle valve (45, 46) owing to a moving action of the wire (48) in a longitudinal direction, is mounted to an outer side of the throttle body (43) in a vehicle width direction and the bypass pipe (50) extends on an opposite side to that side of the intake pipe (40), on which the pulley (47) is provided as viewed in a plan view of a vehicle.

6. The motorcycle according to claim 3, wherein the fuel injection valve (17) is mounted to the cylinder head (20), at least a part thereof being arranged in a projected region of the intake pipe (40) as viewed from laterally of the vehicle.

7. The motorcycle according to claim 3, wherein a throttle body (43) accommodating therein a throttle valve (45, 46) so as to enable opening and closing of the same is connected to an intermediate portion of the intake pipe (40), a pulley (47), around which a wire (48) is wound and which enables opening and closing of the throttle valve (45, 46) owing to a moving action of the wire (48) in a longitudinal direction, is mounted to an outer side of the throttle body (43) in a vehicle width direction and the fuel injection valve (17) is arranged on an opposite side to that side, on which the pulley (47) is arranged, as viewed in a plan view of a vehicle.

8. The motorcycle according to any one of claims 1 to 3, wherein at least a part of a piping path of the intake pipe (40) extends on a central axis with respect to a vehicle width direction, a connected end of the intake pipe (40) toward the air cleaner (22) is arranged offset from the central axis with respect to the vehicle width direction, and at least a part of the fuel injection valve (17) is arranged in a projected region at the connected end toward the air cleaner (22) as viewed from the front of a vehicle.

## Patentansprüche

1. Motorrad, das ein Fahrzeug bildet und einen Zylinderkopf (20), der einen Fahrzeug-Vorderabschnitt aufweist,
einen Luftfilter (22), der in der Nähe des Fahrzeug-Vorderabschnitts des Zylinderkopfes (20) angeordnet ist,
ein Ansaugrohr (40), das den Zylinderkopf (20) und den Luftfilter (22) verbindet, sowie ein Kraftstoff-Einspritzventil (17) umfasst,
**dadurch gekennzeichnet, dass**
wenigstens ein Teil des Kraftstoff-Einspritzventils (17), seitlich von dem Fahrzeug aus gesehen, innerhalb eines Bereiches angeordnet ist, der von dem Zylinderkopf (20), dem Luftfilter (22) und dem Ansaugrohr (40) umgeben ist,
ein Zylinderkopf-Deckel an einer Seite des Fahrzeug-Vorderabschnitts des Zylinderkopfes (20) angebracht ist und der Luftfilter (22) an einer Fahrzeug-Vorderseite des ZylinderkopfDeckels (21) angebracht ist, und
ein Ende des Ansaugrohrs (40) mit einer oberen Fläche des Zylinderkopfes (20) so verbunden ist, dass es von einem Verbindungsbereich aus nach oben ansteigt und sich nach vorne erstreckt, und das andere Ende desselben nach unten gebogen und mit einer oberen Fläche des Luftfilters (22) verbunden ist.

2. Motorrad nach Anspruch 1, wobei wenigstens ein Teil des Kraftstoff-Einspritzventils (17), von der Vorderseite des Fahrzeugs her gesehen, in einem Bereich positioniert ist, der auf den Luftfilter (22) zu vorsteht.

3. Motorrad nach Anspruch 1 oder 2, wobei wenigstens ein Teil des Kraftstoff-Einspritzventils (17), in einer Draufsicht auf das Fahrzeug gesehen, in einer Fahrzeug-Breitenrichtung zu einem vorstehenden Bereich an dem Ansaugrohr (40) versetzt angeordnet ist.

4. Motorrad nach einem der vorangehenden Ansprüche, wobei das Kraftstoff-Einspritzventil (17) an dem Zylinderkopf (20) angebracht ist, und
das Ansaugrohr (40) ein Drosselklappen-Gehäuse (43) enthält, in dem ein Drosselklappen-Ventil (45, 46) aufgenommen ist, um Öffnen und Schließen desselben zu ermöglichen, wobei ein stromauf liegendes Ende eines Umgehungsrohrs (50) mit einem Ansaugkanal (51) verbunden ist, der in dem Drosselklappen-Gehäuse (43) ausgebildet ist, und sich ein stromab liegendes Ende des Umgehungsrohrs (50) oberhalb des Ansaugrohrs (40) erstreckt und mit der näheren Umgebung einer Einspritzspitze des Kraftstoff-Einspritzventils (17) verbunden ist,
und wenigstens ein Teil eines Leitungsverlaufs des Umgehungsrohrs (50), seitlich von dem Fahrzeug aus gesehen, verteilt oberhalb einer Grenze angeordnet ist, die eine Mittellinie des Ansaugrohrs (40) ist, und das Kraftstoff-Einspritzventil (17) verteilt unterhalb der Grenze angeordnet ist.

5. Motorrad nach Anspruch einem der vorangehenden Ansprüche, wobei ein Drosselklappen-Gehäuse (43), in dem ein Drosselklappen-Ventil (45, 46) aufgenommen ist, um Öffnen und Schließen desselben zu ermöglichen, mit einem Zwischenabschnitt des Ansaugrohrs (40) verbunden ist, eine Scheibe, um die ein Seil (48) herum gewickelt ist und die Öffnen und Schließen des Drosselklappen-Ventils (45, 46) auf Grund eines Bewegungsvorgangs des Seils (48) in einer Längsrichtung ermöglicht, an einer Außenseite des Drosselklappen-Gehäuses (43) in einer Fahrzeug-Breitenrichtung angebracht ist, und sich das Umgehungsrohr (50), in einer Draufsicht auf ein Fahrzeug gesehen, an einer Seite erstreckt, die der Seite des Ansaugrohrs (40) gegenüberliegt, an der die Scheibe (47) vorhanden ist.

6. Motorrad nach Anspruch 3, wobei das Kraftstoff-Einspritzventil (17) an dem Zylinderkopf (20) angebracht ist und, seitlich von dem Fahrzeug aus gesehen, wenigstens ein Teil desselben in einem vorstehenden Bereich des Ansaugrohrs (40) angeordnet ist.

7. Motorrad nach Anspruch 3, wobei ein Drosselklappen-Gehäuse (43), in dem ein Drosselklappen-Ventil (45, 46) aufgenommen ist, um Öffnen und Schließen desselben zu ermöglichen, mit einem Zwischenabschnitt des Ansaugrohrs (40) verbunden ist, eine Scheibe, um die ein Seil (48) herum gewickelt ist, und die Öffnen und Schließen des Drosselklappen-Ventils (45, 46) auf Grund eines Bewegungsvorgangs des Seils (48) in einer Längsrichtung ermöglicht, an einer Außenseite des Drosselklappen-Gehäuses (43) in einer Fahrzeug-Breitenrichtung angebracht ist, und das Kraftstoff-Einspritzventil (17), in einer Draufsicht auf ein Fahrzeug gesehen, an einer Seite angeordnet ist, die der Seite gegenüberliegt, an der die Scheibe (47) angeordnet ist.

8. Motorrad nach einem der Ansprüche 1 bis 3, wobei wenigstens ein Teil eines Leitungsweges des Ansaugrohrs (40) auf einer Mittelachse in Bezug auf eine Fahrzeug-Breitenrichtung verläuft, ein verbundenes Ende des Ansaugrohrs (40) zu dem Luftfilter (22) hin in Bezug auf die Fahrzeug-Breitenrichtung zu der Mittelachse versetzt angeordnet ist, und wenigstens ein Teil des Kraftstoff-Einspritzventils (17), von der Vorderseite eines Fahrzeugs her gesehen, in einem vorstehenden Bereich an dem verbundenen Ende und zu dem Luftfilter (22) hin angeordnet ist.

## Revendications

1. Motocycle formant un véhicule et comprenant une tête de cylindre (20) avec une partie avant, dans le sens du véhicule,
un filtre à air (22) disposé près de ladite partie avant de la tête de cylindre (20),
un tuyau d'admission (40) monté entre la tête de cylindre (20) et le filtre à air (22), et
une soupape d'injection de carburant (17),
**caractérisé**
**en ce qu'**une partie au moins de la soupape d'injection de carburant (17) est disposée à l'intérieur d'une zone entourée par la tête de cylindre (20), le filtre à air (22) et le tuyau d'admission (40), vue du côté du véhicule,
**en ce qu'**un couvercle de tête de cylindre (21) est monté sur un côté de ladite partie avant de la tête de cylindre (20), et le filtre à air (22) est monté sur un côté avant, dans le sens du véhicule, du couvercle de tête de cylindre (21), et
**en ce qu'**une extrémité du tuyau d'admission (40) est reliée à une surface supérieure de la tête de cylindre (20) pour s'étendre vers le haut à partir d'une zone de liaison et vers l'avant, tandis que son autre extrémité est courbée vers le bas pour être reliée à une surface supérieure du filtre à air (22).

2. Motocycle selon la revendication 1, étant précisé qu'une partie au moins de la soupape d'injection de carburant (17) est placée dans une zone qui fait saillie sur le filtre à air (22), vue de l'avant du véhicule.

3. Motocycle selon la revendication 1 ou 2, étant précisé qu'une partie au moins de la soupape d'injection de carburant (17) est décalée, dans le sens de la largeur du véhicule, par rapport à une zone qui fait saillie sur le tuyau d'admission (40), sur une vue en plan du véhicule.

4. Motocycle selon l'une quelconque des revendications précédentes, étant précisé que la soupape d'injection de carburant (17) est montée sur la tête de cylindre (20) et que le tuyau d'admission (40) comprend un corps d'étranglement (43) qui renferme un papillon des gaz (45, 46) de manière à permettre son ouverture et sa fermeture, une extrémité amont d'un tuyau de dérivation (50) étant reliée à un passage d'admission (51) formé dans le corps d'étranglement (43) tandis qu'une extrémité aval du tuyau d'admission (50) s'étend au-dessus du tuyau d'admission (40) pour être reliée au voisinage d'une pointe d'injection de la soupape d'injection de carburant (17),
moyennant quoi une partie au moins d'une trajectoire du tuyau de dérivation (50) est répartie au-dessus d'une limite constituée par un axe central du tuyau d'admission (40), vu du côté du véhicule, et la soupape d'injection de carburant (17) est répartie au-dessous de cette limite.

5. Motocycle selon l'une quelconque des revendications précédentes, étant précisé qu'un corps d'étranglement (43) renfermant un papillon (45, 46) de manière à permettre son ouverture et sa fermeture est relié à une partie intermédiaire du tuyau d'admission (40), qu'une poulie (47) sur laquelle est enroulé un fil (48) et qui permet l'ouverture et la fermeture du papillon (45, 46) en raison d'une action de déplacement du fil (48) dans un sens longitudinal est montée sur un côté extérieur du corps d'étranglement (43), dans le sens de la largeur du véhicule, et que le tuyau de dérivation (50) s'étend sur un côté opposé au côté du tuyau d'admission (40) sur lequel est prévue la poulie (47), sur une vue en plan d'un véhicule.

6. Motocycle selon la revendication 3, étant précisé que la soupape d'injection de carburant (17) est montée sur la tête de cylindre (20), avec une partie au moins qui est disposée sur une zone saillante du tuyau d'admission (40), vue du côté du véhicule.

7. Motocycle selon la revendication 3, étant précisé qu'un corps d'étranglement (43) renfermant un papillon (45, 46) de manière à permettre son ouverture et sa fermeture est relié à une partie intermédiaire du tuyau d'admission (40), qu'une poulie (47) sur laquelle est enroulé un fil (48) et qui permet l'ouverture et la fermeture du papillon (45, 46) en raison d'une action de déplacement du fil (48) dans un sens longitudinal est montée sur un côté extérieur du corps d'étranglement (43), dans le sens de la largeur du véhicule, et que la soupape d'injection de carburant (17) est disposée sur un côté opposé au côté sur lequel la poulie (47) est disposée, sur une vue en plan d'un véhicule.

8. Motocycle selon l'une quelconque des revendications 1 à 3, étant précisé qu'une partie au moins d'une trajectoire du tuyau d'admission (40) s'étend sur un axe central par rapport au sens de la largeur du véhicule, qu'une extrémité reliée du tuyau d'admission (40) dirigée vers le filtre à air (22) est décalée par rapport à l'axe central, dans le sens de la largeur du véhicule, et qu'une partie au moins de la soupape d'injection de carburant (17) est disposée dans une zone saillante, à l'extrémité reliée dirigée vers le filtre à air (22), vue de l'avant d'un véhicule.
